# DEMANDE DE BREVET EUROPEEN

(11) **EP 1 536 115 A1**
(43) Date de publication de la demande: **01.06.2005**
(21) Numéro de dépôt: 04300768.1
(22) Date de dépôt: 09.11.2004
(51) Int. Cl.: F02B 29/04

(54) **Méthode de suralimentation d'un moteur en gaz froids**

(30) Priorité: 27.11.2003 FR 0313949
(71) Demandeur: Renault s.a.s., 92100 Boulogne Billancourt (FR)
(72) Inventeur: Rivere, Jean-Pierre, 75016 PARIS (FR)

(57) **Abrégé**

L'invention concerne une méthode et un dispositif de suralimentation d'un moteur à combustion interne comprenant une étape de compression de gaz d'admission et une étape d'injection des gaz d'admission comprimés dans ledit moteur. La méthode comprend en outre une étape intermédiaire de détente desdits gaz d'admission comprimés dans une machine thermique (26) apte à produire du travail, de façon à abaisser la température desdits gaz d'admission comprimés avant ladite étape d'injection.

## Description

La présente invention se rapporte à une méthode de suralimentation en gaz froids d'un moteur à combustion interne et à une installation de mise en oeuvre de cette méthode.

On connaît des moteurs à combustion interne suralimentés, pour lesquels on utilise les gaz de combustion du moteur, ou gaz d'échappement, pour entraîner une turbine qui elle-même est couplée en rotation à un compresseur, permet tant de comprimer les gaz d'admission du moteur pour en augmenter la puissance.

En revanche, la compression des gaz d'admission, c'est à dire l'air dont l'oxygène permet la combustion, provoque réchauffement de ces gaz jusqu'à une température au moins équivalente à 120°C, ce qui est préjudiciable. La température élevée de ces gaz nuit, notamment, au couple spécifique du moteur et plus particulièrement au cliquetis des moteurs à allumage commandés. L'énergie thermique des gaz d'admission contribue, en effet, à augmenter la température du mélange combustible qui ainsi, se rapproche du domaine correspondant aux flammes froides et s'auto- enflamme avant que la flamme ne survienne à proximité des parois.

Un moyen de pallier ce phénomène consiste à refroidir les gaz d'admission une fois comprimés, dans un échangeur thermique. Dans la pratique la température des gaz d'admission ne peut être abaissée en dessous d'environ 55°C.

Un problème qui se pose et que vise à résoudre la présente invention est alors de proposer une méthode et un dispositif de suralimentation qui permette d'introduire les gaz d'admission à basse température dans le moteur, sans pour autant atténuer sensiblement son rendement global.

A cet effet, selon un premier objet, la présente invention propose une méthode de suralimentation d'un moteur à combustion interne comprenant une étape de compression de gaz d'admission et une étape d'injection des gaz d'admission comprimés dans le moteur, cette méthode comprenant en outre, une étape intermédiaire de détente des gaz d'admission comprimés dans une machine thermique apte à produire du travail, de façon à abaisser la température des gaz d'admission comprimés avant l'étape d'injection.

Ainsi, une caractéristique de l'invention réside dans l'utilisation d'une machine thermique, dans laquelle les gaz comprimés sont adaptés à se détendre pour fournir du travail et, à dissiper ce travail en chaleur. Une partie de l'enthalpie des gaz d'admission est convertie en travail extérieur, de sorte que la température des gaz d'admission chute, et ces derniers sont alors injectés dans le moteur à une température inférieure à celle des dispositifs conformes à l'art antérieur.

Non seulement, la température des gaz d'admission est abaissée, ce qui est avantageux pour le fonctionnement du moteur, mais en plus la machine thermique produit du travail qui est utilisable, par exemple pour produire de l'énergie électrique, ce qui accroît le rendement global du moteur ; cette énergie électrique peut être utilisée directement par les appareils du véhicule fonctionnant électriquement sans qu'il soit nécessaire de la prélever sur un alternateur.

Selon un autre mode de mise en oeuvre de l'invention, on utilise le travail pour comprimer un fluide. Par exemple, en alimentant une turbine couplée à une pompe à eau. Cette pompe à eau peut servir à la circulation de l'eau de refroidissement du moteur ou à un circuit de chauffage.

Dans une autre variante de réalisation, on peut alimenter une turbine couplée cette fois, à un compresseur pneumatique. On utilise alors l'air comprimé pour maintenir une variation de pression constante des gaz d'admission comprimés en fonction de leur débit, variation de pression qu'ils subissent lors de la détente.

Par ailleurs, on peut aussi abaisser, la température des gaz d'admission comprimés par échange thermique, afin de diminuer plus encore la température des gaz d'admission.

L'invention propose également une installation de suralimentation d'un moteur à combustion interne comprenant un premier compresseur pour comprimer des gaz d'admission et des moyens d'injection reliés au premier compresseur pour injecter les gaz d'admission comprimés dans le moteur. Cette installation comprend en outre, entre le compresseur et les moyens d'injection, une machine thermique dans laquelle les gaz d'admission comprimés sont adaptés à se détendre en produisant du travail de façon à abaisser la température des gaz d'admission comprimés.

Ainsi, la machine thermique permet non seulement de faire chuter la température des gaz d'admission après qu'ils ont été comprimés mais en plus de produire du travail susceptible d'être utilisé. Dans ce but, la machine thermique comprend une première turbine adaptée à entraîner, des moyens de production d'énergie électrique.

Selon une autre variante, la machine thermique peut comprendre une deuxième turbine couplée à un second compresseur adapté à comprimer un fluide. Ainsi, l'installation comprend par ailleurs, un circuit de régulation raccordé à la fois entre le premier compresseur et ladite machine thermique et entre ladite machine thermique et lesdits moyens d'injection. Le fluide comprimé est ainsi susceptible de s'écouter dans le circuit pour maintenir une variation de pression due à la détente dans la machine thermique, constante en fonction du débit des gaz d'admission comprimés.

La différence de pression des gaz d'admission entre l'amont et l'aval de la machine thermique peut donc rester indépendante du débit de gaz qui traverse le moteur.

Dans un autre mode de mise en oeuvre, l'installation comprend un échangeur thermique pour abaisser plus encore la température des gaz d'admission comprimés.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la figure 1 est une vue schématique d'une première installation de suralimentation d'un moteur à combustion interne selon un premier mode de mise en oeuvre ; et,
- la figure 2 est une vue schématique d'une seconde installation de suralimentation d'un moteur à combustion interne selon un second mode de mise en oeuvre.

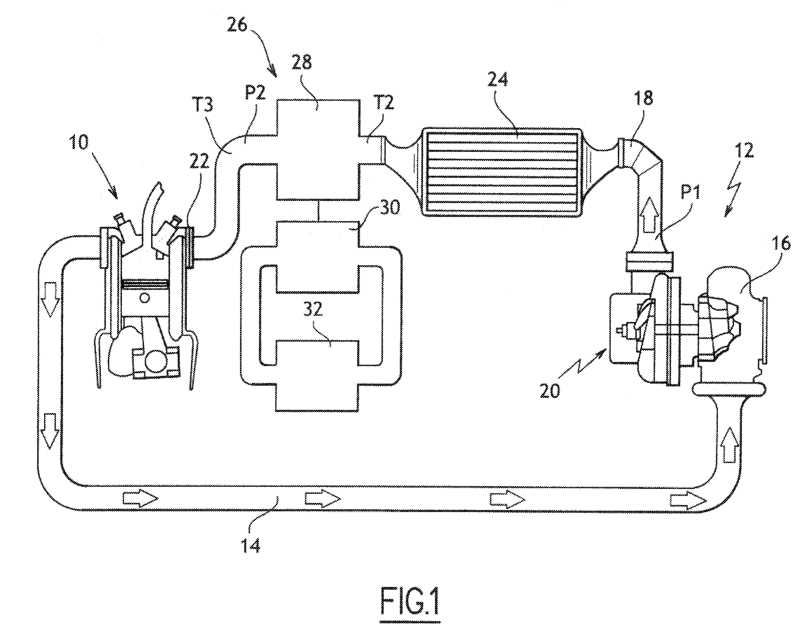

La figure 1 montre schématiquement un moteur 10 et un turbo-compresseur 12, couplés ensemble par deux circuits parallèles. Un premier circuit 14 est adapté à collecter les gaz brûlés du moteur pour les acheminer dans une première turbine 16 du turbo-compresseur 12 et un second circuit 18, dans lequel gaz d'admission sont comprimés par un compresseur 20 couplé en rotation à la turbine 16, permet d'injecter au moyen d'injecteurs 2 2 les gaz d'admission comprimés dans la chambre d'admission ou directement dans la chambre de combustion du moteur 10.

Le second circuit 18 comporte, tout d'abord, un échangeur thermique 24 destiné à abaisser la température des gaz d'admission. Ces gaz d'admission, constitués d'air prélevé à l'extérieur au niveau du compresseur 20 sont comprimés à une pression P1, sensiblement égale à 4 bars et échauffés à une température T1 supérieure à 120°C, avant de s'écouler dans l'échangeur 24.

En sortie d'échangeur thermique 24, la température T2 a déjà chuté d'environ 65°C pour atteindre 55°C. On considère que la pression est restée inchangée en traversant l'échangeur,

Ensuite, et c'est l'objet de l'invention, le second circuit 18 comporte, entre l'échangeur thermique 24 et le moteur 10, une machine thermique 26, adaptée à produire du travail en dissipant, de l'énergie thermique.

Grâce à cette machine thermique, la température des gaz d'admission comprimés et sortant de l'échangeur 24, peut chuter de plusieurs dizaines de degré, pour atteindre une température T3 en sortie de machine thermique 26, par exempte de 25°C. De la sorte, les gaz d'admission comprimés et refroidis sont alors injectés grâce aux injecteurs 22 dans le moteur 10 pour procurer les avantages précités, notamment en terme de couple spécifique et de cliquetis.

Cette machine thermique 26, telle qu'illustrée sur la figure 1, présente tout d'abord une seconde turbine 28 couplée en rotation avec un second compresseur 30. Bien que la pression des gaz d'admission comprimés en sortie de turbine 28 ait diminué pour atteindre une pression P2 de l'ordre de 3 bars, cela ne remet pas en cause l'efficacité de l'injection à travers les injecteurs 22 et de la suralimentation,

Non seulement la suralimentation garde toute son efficacité, mais en plus la turbine 28 permet d'entraîner le second compresseur 30, qui selon une variante illustrée sur la figure 1, est une pompe adaptée à entraîner un fluide en circulation dans un autre circuit 32. Ainsi, de l'énergie est récupérée, par exemple pour le fonctionnement de la pompe à eau du véhicule automobile.

Toutefois, dans un mode de réalisation non représenté, la turbine est couplée à un alternateur adapté à fournir du courant électrique.

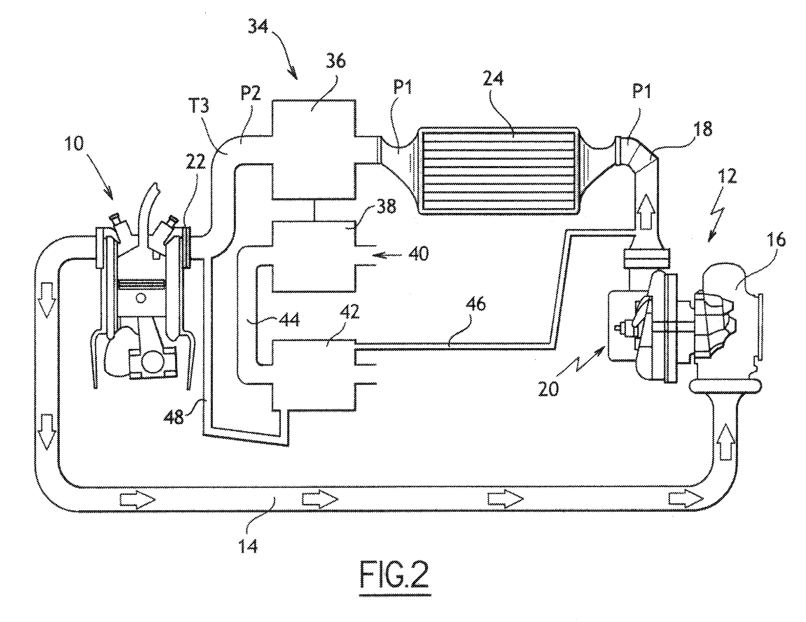

Selon un autre mode de mise en oeuvre illustré sur la figure 2, sur laquelle on retrouve la même installation que la précédente, excepté qu'elle comporte une seconde machine thermique 34, on utilise l'énergie produite par cette seconde machine 34 pour que la différence entre la pression amont P1 et la pression aval P2 de la machine 34 soit constante quel que soit le débit des gaz d'admission qui alimentent le moteur 10.

Ainsi, la seconde machine thermique 34, comporte, tout comme la précédente une turbine 36 qui est couplée à un troisième compresseur 38. Ce troisième compresseur 38 permet de comprimer de l'air qu'il aspire à une entrée 40 puis, qu'il injecte comprimé dans un régulateur de pression 42 via un circuit de liaison 44.

Ce régulateur de pression 42 est asservi aux pressions P1 et P2 par l'intermédiaire d'une première canalisation 46 et d'une seconde canalisation 48, la première 46 reliant le régulateur de pression 46 et la conduite 18 entre l'échangeur thermique 24 et le premier compresseur 20 et la seconde 48 reliant le régulateur de pression 42 à la conduite 18, entre la turbine 36 et le moteur 10.

De la sorte, la différence de pression entre P1 et P2 demeure indépendante du débit de gaz d'admission ou plus précisément, d'air qui traverse le moteur.

## Revendications

1. Méthode de suralimentation d'un moteur à combustion interne comprenant une étape de compression de gaz d'admission et une étape d'injection des gaz d'admission comprimés dans ledit moteur,
**caractérisée en ce qu'**elle comprend en outre une étape intermédiaire de détente des gaz d'admission comprimés dans une machine thermique (26, 34) apte à produire du travail, de façon à abaisser la température des gaz d'admission comprimés avant l'étape d'injection.

2. Méthode de suralimentation selon la revendication 1, **caractérisée en ce qu'**on utilise le travail produit pour produire de l'énergie électrique.

3. Méthode de suralimentation selon la revendication 1, **caractérisée en ce qu'**on utilise le travail produit pour comprimer un fluide.

4. Méthode de suralimentation selon la revendication 3, **caractérisée en ce que**, durant l'étape intermédiaire de détente où les gaz d'admission comprimés subissent une variation de pression, on utilise le fluide comprimé pour maintenir la variation de pression constante en fonction du débit des gaz d'admission comprimés.

5. Méthode de suralimentation selon l'une quelconque des revendications 1 à 4, **caractérisée en ce qu'**on abaisse en outre, la température des gaz d'admission comprimés par échange thermique.

6. Installation de suralimentation d'un moteur à combustion interne comprenant un premier compresseur (20) pour comprimer des gaz d'admission et des moyens d'injection (22, 18) reliés au premier compresseur (20) pour injecter les gaz d'admission comprimés dans ledit moteur (10),
**caractérisée en ce qu'**elle comprend en outre, entre le compresseur (20) et les moyens d'injection (22), une machine thermique (26, 34) dans laquelle les gaz d'admission comprimés sont adaptés à se détendre en produisant du travail de façon à abaisser la température des gaz d'admission comprimés.

7. Installation de suralimentation selon la revendication 6, **caractérisée en ce que** la machine thermique (26) comprend une première turbine (30) adaptée à entraîner des moyens de production d'énergie électrique.

8. Installation de suralimentation selon la revendication 6, **caractérisée en ce que** la machine thermique (34) comprend une deuxième turbine (36) couplée à un second compresseur (38) adapté à comprimer un fluide.

9. Installation de suralimentation selon la revendication 8, **caractérisée en ce qu'**elle comprend un circuit de régulation (46, 48) raccordé à la fois entre le premier compresseur (20) et la machine thermique (34) et entre la machine thermique (34) et les moyens d'injection (22) et dans lequel ledit fluide comprimé est susceptible de s'écouler pour maintenir une variation de pression due à la détente dans la machine thermique (34), constante en fonction du débit des gaz d'admission comprimés.

10. Installation de suralimentation selon l'une quelconque des revendications 6 à 9, **caractérisée en ce qu'**elle comprend en outre un échangeur thermique (24) pour abaisser la température des gaz d'admission comprimés.
